# EUROPEAN PATENT APPLICATION

(11) **EP 4 556 302 A2**
(43) Date of publication of application: **21.05.2025**
(21) Application number: 24209486.0
(22) Date of filing: 29.10.2024
(51) Int. Cl.: B60L 53/80, B60L 3/00, B60L 1/00, B60L 58/12, B60L 58/20

(54) **VEHICLE AND BATTERY REPLACEMENT METHOD**

(30) Priority: 14.11.2023 JP 2023193498
(71) Applicant: TOYOTA JIDOSHA KABUSHIKI KAISHA, Toyota-Shi, Aichi-Ken 471-8571 (JP)
(72) Inventor: ICHIKAWA, Shinji, Toyota-Shi, Aichi-Ken 471-8571 (JP)
(74) Representative: Cabinet Beau de Loménie

(57) **Abstract**

A vehicle (100, 100A, 100B) includes a vehicle body (10, 10A). The vehicle body (10, 10A) includes a first circuit and a first control device. The vehicle body (10, 10A) is configured such that a power storage device is attachable to and removable from the vehicle body. The power storage device includes a second circuit. The second circuit includes a battery (21). The first control device is configured to acquire information on at least one of a state of the battery (21) or a state of the second circuit from the power storage device when the power storage device is attached to the vehicle body (10, 10A), and determine, using the information, whether to apply a voltage of the battery (21) to the first circuit.

## Description

### BACKGROUND OF THE INVENTION

### 1. Field of the Invention

The present disclosure relates to a vehicle and a battery replacement method.

### 2. Description of Related Art

Japanese Unexamined Patent Application Publication No. 2011-127969 (JP 2011-127969 A) discloses a self-diagnosis (OBD: on-board diagnosis) technology related to a fail-safe function that is activated when an abnormality occurs in an in-vehicle battery. In this technology, before charging the in-vehicle battery, whether the fail-safe function of a control system is activated normally is checked using a pseudo-shutdown signal for diagnosis that serves as a notification about overcharging.

### SUMMARY OF THE INVENTION

In the technology described in JP 2011-127969 A, the fail-safe function is activated when an abnormality occurs in the battery mounted on the vehicle in use. In such a vehicle, the abnormal (malfunctioning) battery may be replaced with a normal battery. The battery replacement method includes, for example, removing a first battery from a vehicle including a vehicle body and the first battery, and attaching a second battery to the vehicle body in place of the first battery. Such a battery replacement method may be performed at a battery replacement station.

The second battery is required not only to be free of malfunctions but also to have specifications adapted to the vehicle body. Therefore, it is conceivable that the battery replacement station selects the second battery having specifications adapted to the vehicle body from an inventory including a plurality of batteries and provides the selected second battery to the vehicle body. Even with the battery selected in this way, however, there is a possibility that the battery does not operate properly when attached to the vehicle body. For example, there is a possibility that, immediately after the battery is attached to the vehicle body, the battery does not operate properly in the vehicle because the battery is not subject to status management by a control device on the vehicle body side. When the voltage of the battery that is not operating properly is applied to the vehicle body (more specifically, circuits in the vehicle body), the battery voltage may damage the vehicle body or cause instability of the operation of the vehicle driven by the battery voltage.

The present disclosure suppresses malfunctions in a vehicle caused by a battery attached to a vehicle body.

According to a first aspect of the present disclosure, the following vehicle is provided.
(1) The vehicle according to the first aspect of the present invention includes a vehicle body. The vehicle body includes a first circuit and a first control device. The vehicle body is configured such that a power storage device is attachable to and removable from the vehicle body. The power storage device includes a second circuit. The second circuit includes a battery. The first control device is configured to acquire information on at least one of a state of the battery or a state of the second circuit from the power storage device when the power storage device is attached to the vehicle body, and determine, using the information, whether to apply a voltage of the battery to the first circuit.
   In the above configuration, the first control device of the vehicle body can acquire the information on at least one of the state of the battery or the state of the second circuit in the power storage device (hereinafter sometimes referred to as "state information") from the power storage device. The first control device can determine whether to apply the voltage of the battery to the first circuit of the vehicle body based on the state of the power storage device (specifically, the state of the battery and/or the state of the second circuit) before the power storage device applies the voltage to the vehicle body. Therefore, when the power storage device (including the battery) attached to the vehicle body is not operable normally in the vehicle, it is possible to prevent the voltage of the battery from being applied to the first circuit. Thus, malfunctions in the vehicle that may be caused by the battery attached to the vehicle body are suppressed.
   The vehicle according to (1) may have a configuration according to any one of (2) to (12) that will be described below.
(2) In the vehicle according to the above aspect, the information (state information) may indicate at least one of the voltage of the battery, a temperature of the battery, or an electric leakage state of the second circuit.
   With the above configuration, the first control device can easily and accurately determine whether the power storage device (including the battery) attached to the vehicle body is operable normally in the vehicle, and therefore whether to apply the voltage of the battery to the first circuit.
(3) In the vehicle according to the above aspect, the first control device may be configured not to apply the voltage of the battery to the first circuit until the information (state information) is acquired from the power storage device after the power storage device is attached to the vehicle body.
   In the above vehicle, when the vehicle body (first control device) cannot acquire the state information from the power storage device due to a communication abnormality or other factors, the voltage of the battery is not applied to the vehicle body (first circuit). Thus, malfunctions in the vehicle that may be caused by the battery attached to the vehicle body are suppressed.
(4) In the vehicle according to the above aspect, the power storage device may be a battery pack further including a second control device in addition to the second circuit. The vehicle body may further include a power supply. The second control device may be started up with electric power supplied from the power supply when the power storage device is attached to the vehicle body, and the second control device that has been started up may transmit the information (state information) to the first control device.
   In the above vehicle, even when a battery pack that does not include a power supply for starting up the second control device is attached to the vehicle body, the vehicle body (first control device) can acquire the state information from the power storage device (second control device) by supplying electric power to the second control device from the power supply provided in the vehicle body. The power supply provided in the vehicle body may be a low-voltage power supply that outputs electric power at a voltage lower than the voltage of the battery provided in the power storage device. The low-voltage power supply may be configured to supply electric power to the first control device. The low-voltage power supply may be an auxiliary battery.
(5) In the vehicle according to the above aspect, the second control device may be configured to acquire the voltage of the battery. The information (state information) may indicate the voltage of the battery. The first control device may, when the power storage device is attached to the vehicle body, be configured to apply the voltage of the battery to the first circuit when the voltage of the battery is within a predetermined range, and not to apply the voltage of the battery to the first circuit when the voltage of the battery is not within the predetermined range.
   In the above vehicle, the first control device applies the voltage of the battery to the first circuit after confirming that the voltage of the battery is within the appropriate range. Thus, malfunctions in the vehicle are suppressed. The voltage of the battery may vary depending on, for example, the stored charge in the battery.
(6) In the vehicle according to the above aspect, the second control device may be configured to acquire a temperature of the battery. The information (state information) may indicate the temperature of the battery. The first control device may, when the power storage device is attached to the vehicle body, be configured to apply the voltage of the battery to the first circuit when the temperature of the battery is within a predetermined range, and not to apply the voltage of the battery to the first circuit when the temperature of the battery is not within the predetermined range.
   The first control device applies the voltage of the battery to the first circuit after confirming that the temperature of the battery is within the appropriate range. Thus, malfunctions in the vehicle are suppressed.
(7) In the vehicle according to the above aspect, the second control device may be configured to acquire an electric leakage state of the second circuit. The information (state information) may indicate the electric leakage state of the second circuit. The first control device may, when the power storage device is attached to the vehicle body, be configured to apply the voltage of the battery to the first circuit when no electric leakage has occurred in the second circuit, and not to apply the voltage of the battery to the first circuit when electric leakage has occurred in the second circuit.
   The first control device applies the voltage of the battery to the first circuit after confirming that no electric leakage has occurred in the battery circuit (second circuit). Thus, malfunctions in the vehicle are suppressed.
(8) In the vehicle according to the above aspect, the vehicle body may further include a first terminal configured such that the power storage device is attachable to and removable from the first terminal, and a first relay disposed between the first terminal and the first circuit. The first circuit may include a motor. The first control device may be configured to switch the first relay from a disconnected state to a connected state when the first control device determines to apply the voltage of the battery to the first circuit.
   In the above vehicle, the first control device can switch connection and disconnection of an electric path between the power storage device and the motor in the vehicle body by controlling the first relay in the vehicle body. Thus, the first control device can easily control the timing of application of the voltage of the battery to the motor.
(9) In the vehicle according to the above aspect, the power storage device may further include a second terminal configured such that the vehicle body is attachable to and removable from the second terminal, and a second relay disposed between the second terminal and the second circuit. The first control device may be configured to switch the second relay from a disconnected state to a connected state when the first control device determines to apply the voltage of the battery to the first circuit.
   In the above vehicle, the first control device can switch connection and disconnection of an electric path between the battery in the power storage device and the vehicle body by controlling the second relay in the power storage device. Thus, the first control device can easily control the timing of application of the voltage of the battery to the vehicle body.
(10) In the vehicle according to the above aspect, the first control device may be configured to give a predetermined notification to a user of the vehicle when the first control device determines not to apply the voltage of the battery to the first circuit.
   In the above vehicle, when the power storage device attached to the vehicle body is not operable normally, a notification corresponding to the situation can be given to the user of the vehicle.
(11) In the vehicle according to the above aspect, the first control device may be configured to communicate with a battery replacement system. The battery replacement system may include a replacement device configured to replace the power storage device attached to the vehicle body with another power storage device. The first control device may be configured to request the battery replacement system to replace the power storage device attached to the vehicle body when the first control device determines not to apply the voltage of the battery to the first circuit.
   In the above vehicle, when the power storage device attached to the vehicle body is not operable normally in the vehicle, the first control device can request the battery replacement system to replace the power storage device. Thus, the power storage device that does not operate normally can easily be replaced with another power storage device before the power storage device applies the voltage to the vehicle body (first circuit).
(12) In the vehicle according to the above aspect, the first control device may be configured to communicate with a battery replacement system. The battery replacement system may include a replacement device configured to replace the power storage device attached to the vehicle body with another power storage device. The first control device may be configured to: determine whether to apply the voltage of the battery to the first circuit before the battery replacement system fixes the power storage device to the vehicle body; request the battery replacement system to fix the power storage device to the vehicle body when the first control device determines to apply the voltage of the battery to the first circuit; and request the battery replacement system to remove the power storage device from the vehicle body when the first control device determines not to apply the voltage of the battery to the first circuit.
   When the power storage device is replaced with another power storage device after the power storage device is fixed to the vehicle body (e.g., fastened with bolts), labor for unfixing is required. It also takes time for the unfixing. In this regard, in the above configuration, determination is made as to whether to remove the power storage device from the vehicle body before the power storage device is fixed to the vehicle body. Thus, it is possible to save time and labor for the unfixing.
   According to a second aspect of the present disclosure, the following battery replacement method is provided.
(13) In the vehicle according to the above aspect, the first control device may, when the power storage device is attached to the vehicle body, be further configured to apply the voltage of the battery to the first circuit when the information satisfies a predetermined requirement, and not to apply the voltage of the battery to the first circuit when the information does not satisfy the predetermined requirement.
(14) A battery replacement method according to the second aspect of the present invention includes: removing a first power storage device from a vehicle including a vehicle body and the first power storage device, the vehicle body including a first circuit and a first control device, the first power storage device including a first battery; attaching a second power storage device to the vehicle body in place of the first power storage device, the second power storage device including a second circuit and a second control device, the second circuit including a second battery; acquiring, by the first control device, information on at least one of a state of the second battery or a state of the second circuit from the second control device with the second power storage device attached to the vehicle body; and determining, by the first control device, using the information acquired from the second control device, whether to apply a voltage of the second battery to the first circuit.

With the battery replacement method, malfunctions in the vehicle that may be caused by the battery attached to the vehicle body are suppressed similarly to the vehicle described above.

According to the present disclosure, it is possible to suppress the malfunctions in the vehicle caused by the battery attached to the vehicle body.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows a configuration of a vehicle according to an embodiment of the present disclosure;
FIG. 2 is a flowchart showing a process related to a self-diagnosis of an in-vehicle battery that is performed by the vehicle according to the embodiment of the present disclosure;
FIG. 3 shows an example of a configuration of a battery replacement system for replacing a power storage device;
FIG. 4 is a flowchart showing a battery replacement method according to the embodiment of the present disclosure;
FIG. 5 shows an example of a replacement device in the battery replacement system;
FIG. 6 illustrates how a vehicle body and the power storage device are connected according to the embodiment of the present disclosure;
FIG. 7 is a flowchart showing a process that is performed by a control device in the vehicle body after the power storage device is attached to the vehicle body in the battery replacement method shown in FIG. 4;
FIG. 8 is a flowchart showing a first modification of the process shown in FIG. 7;
FIG. 9 is a flowchart showing a second modification of the process shown in FIG. 7;
FIG. 10 is a flowchart showing a third modification of the process shown in FIG. 7;
FIG. 11 is a flowchart showing a fourth modification of the process shown in FIG. 7;
FIG. 12 is a flowchart showing a first modification of the battery replacement method shown in FIG. 4;
FIG. 13 is a flowchart showing a process that is performed by the control device in the vehicle body after the power storage device is attached to the vehicle body in the battery replacement method shown in FIG. 12;
FIG. 14 is a flowchart showing a second modification of the battery replacement method shown in FIG. 4;
FIG. 15 is a flowchart showing a third modification of the battery replacement method shown in FIG. 4;
FIG. 16 shows a first modification of the configuration of the vehicle shown in FIG. 1; and
FIG. 17 shows a second modification of the configuration of the vehicle shown in FIG. 1.

### DETAILED DESCRIPTION OF EMBODIMENTS

An embodiment of the present disclosure will be described in detail with reference to the drawings. The same or corresponding parts are denoted by the same signs throughout the drawings, and description thereof will not be repeated.

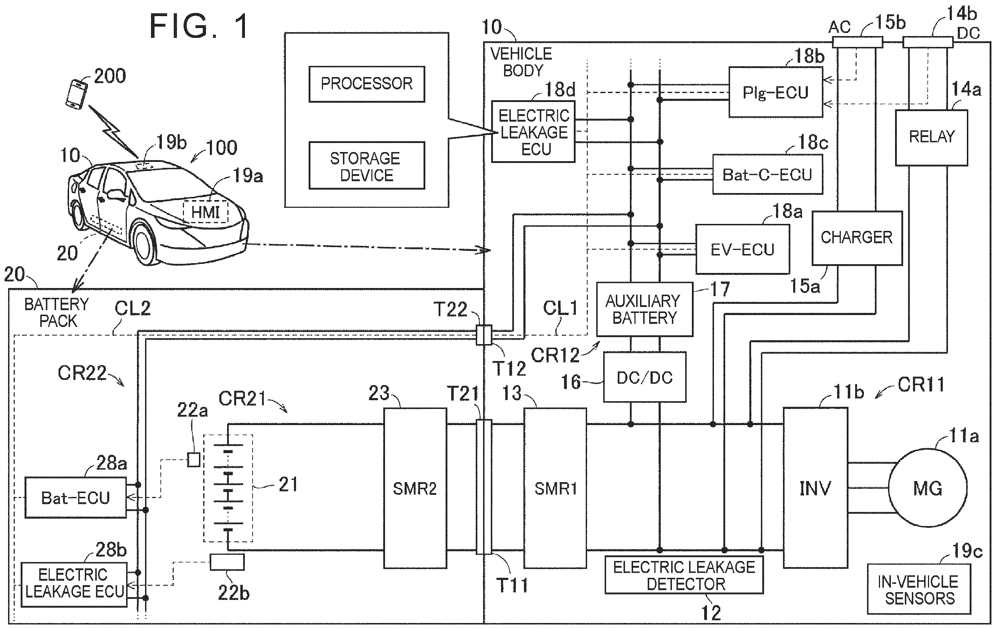

FIG. 1 shows a configuration of a vehicle according to the present embodiment. Referring to FIG. 1, a vehicle 100 includes a vehicle body 10 and a battery pack 20. The vehicle body 10 is a portion of the vehicle 100 other than the battery pack 20. The vehicle 100 is configured to travel using electric power stored in the battery pack 20. The battery pack 20 corresponds to an example of a "power storage device" according to the present disclosure. Examples of the vehicle 100 include a battery electric vehicle (BEV) without an internal combustion engine. However, the present disclosure is not limited to this, and the vehicle 100 may be a plug-in hybrid electric vehicle (PHEV) including an internal combustion engine, or may be any other kinds of electrified vehicle (xEV).

The vehicle body 10 includes circuits CR11 and CR12. The battery pack 20 includes circuits CR21 and CR22. The circuit CR12 includes an auxiliary battery 17. The circuit CR21 includes a battery 21. The auxiliary battery 17 corresponds to a low-voltage power supply that outputs electric power with a voltage lower than the voltage of the battery 21. The circuit CR21 corresponds to a first high-voltage circuit configured to apply a voltage (high voltage) from the battery 21 to the circuit CR11. The circuit CR11 corresponds to a second high-voltage circuit that receives the voltage (high voltage) from the battery 21. The circuit CR12 corresponds to a first low-voltage circuit configured to apply a voltage (low voltage) from the auxiliary battery 17 to the circuit CR22. The circuit CR22 corresponds to a second low-voltage circuit that receives the voltage (low voltage) from the auxiliary battery 17. A direct current-to-direct current (DC-DC) converter 16 is provided between the circuits CR11 and CR12.

The circuit CR11 in the vehicle body 10 includes a motor generator (MG) 11a, an inverter 11b, a DC charging relay 14a, a DC inlet 14b, an alternating current (AC) charger 15a, and an AC inlet 15b. The circuit CR11 is provided with an electric leakage detector 12. The circuit CR21 in the battery pack 20 is provided with a battery management system (BMS) 22a and an electric leakage detector 22b. The vehicle body 10 further includes a terminal T11 (first terminal) to which the battery pack 20 is removably attached, and an SMR 13 (first relay) disposed between the terminal T11 and the circuit CR11. The circuit CR11 (high-voltage power supply line) is connected to the terminal T11 via the SMR 13. The battery pack 20 further includes a terminal T21 (second terminal) to which the vehicle body 10 is removably attached, and an SMR 23 (second relay) disposed between the terminal T21 and the circuit CR21. The circuit CR21 (high-voltage power supply line) is connected to the terminal T21 via the SMR 23. The term "SMR" stands for "system main relay".

The battery 21 is a secondary battery such as a lithium ion battery, a nickel metal hydride battery, or a sodium ion battery. The kind of the secondary battery may be a liquid secondary battery or an all-solid-state secondary battery. A plurality of secondary batteries may form an assembled battery.

The vehicle body 10 further includes a terminal T12. The circuit CR12 (low-voltage power supply line) in the vehicle body 10 is connected to the terminal T12. A communication line CL1 in the vehicle body 10 is also connected to the terminal T12. The battery pack 20 further includes a terminal T22. The circuit CR22 (low-voltage power supply line) in the battery pack 20 is connected to the terminal T22. A communication line CL2 in the battery pack 20 is also connected to the terminal T22.

The auxiliary battery 17 is an in-vehicle battery that supplies electric power to drive auxiliary devices mounted on the vehicle 100. The auxiliary battery 17 outputs DC power to the circuit CR12 (low-voltage power supply line). In addition to the auxiliary battery 17, the circuit CR12 further includes ECUs 18a, 18b, 18c, 18d. The circuit CR22 further includes ECUs 28a, 28b. The auxiliary battery 17 supplies electric power to, for example, the ECUs 18a to 18d and 28a, 28b connected to the low-voltage power supply line. The term "ECU" stands for "electronic control unit".

The ECU 18a corresponds to a control device (EV-ECU) that manages various kinds of control related to the vehicle 100. The ECU 18b corresponds to a control device (Plg-ECU) that detects the states of the DC inlet 14b and the AC inlet 15b. The ECU 18c corresponds to a control device (Bat-C-ECU) that controls the DC charging relay 14a and the AC charger 15a. The ECU 18d corresponds to a control device (first electric leakage ECU) that monitors an electric leakage state of the circuit CR11. The ECU 28a corresponds to a control device (Bat-ECU) that monitors the state of the battery 21 and controls the SMR 23. The ECU 28b corresponds to a control device (second electric leakage ECU) that monitors an electric leakage state of the circuit CR21.

Each ECU includes a processor and a storage device. The storage device is configured to save stored information. The storage device stores programs and various kinds of information to be used in the programs. In the present embodiment, various kinds of control are performed by one or more processors executing the programs stored in the storage device. These processes may be performed by hardware (electronic circuitry) alone without using software.

In the vehicle 100, the ECUs are connected to each other to communicate with each other via an in-vehicle network. Examples of the in-vehicle network include a controller area network (CAN). The ECU 18a acquires information from other ECUs, controls the inverter 11b, the DC-DC converter 16, and the SMRs 13, 23, and transmits control commands to the ECU 18c and the ECU 28a.

The electric leakage detector 12 detects an electric leakage state related to the circuit CR11, and outputs the detected electric leakage state to the ECU 18d. The BMS 22a detects the state (current, voltage, temperature, etc.) of the battery 21, and outputs the detection result to the ECU 28a. The electric leakage detector 22b detects an electric leakage state related to the circuit CR21, and outputs the detected electric leakage state to the ECU 28b. When the circuits CR11 and CR21 are connected, the electric leakage detector 12 or 22b detects the electric leakage state of a circuit formed by the circuits CR11 and CR21. When the battery pack 20 is removed from the vehicle body 10, the electric leakage detector 12 detects the electric leakage state of the circuit CR11, and the electric leakage detector 22b detects the electric leakage state of the circuit CR21. The ECU 18a acquires information indicating the battery state and the electric leakage states from the ECUs 18d, 28a, 28b.

The DC-DC converter 16 transforms DC power between the circuits CR11 and CR12. Specifically, the DC-DC converter 16 steps down the DC power from the battery 21 and outputs the stepped-down power to the auxiliary battery 17. The ECU 18a may control the DC-DC converter 16 so that electric power is supplied to the auxiliary battery 17 from the battery 21 (main battery) when the remaining charge of the auxiliary battery 17 has become low. The capacity of the battery 21 is larger than the capacity of the auxiliary battery 17. Each of the SMRs 13, 23 switches connection and disconnection of an electric path between the circuits CR11 and CR21. When the voltage of the battery 21 is applied to the circuit CR11, the ECU 18a closes both the SMRs 13 and 23 (connected state). When the voltage of the battery 21 is not applied to the circuit CR11, the ECU 18a opens at least one of the SMRs 13 or 23 (disconnected state).

The terminals T21, T22 of the battery pack 20 are attachable to and removable from the terminals T11, T12 of the vehicle body 10, respectively. By connecting the terminals T21, T22 to the terminals T11, T12, the battery pack 20 is attached to the vehicle body 10 and the vehicle 100 is completed. In the vehicle 100, the circuit CR11 in the vehicle body 10 is connected to the circuit CR21 in the battery pack 20 via the SMRs 13 and 23. The circuit CR12 in the vehicle body 10 is connected to the circuit CR22 in the battery pack 20. The communication lines CL1 and CL2 are also connected. These communication lines constitute the in-vehicle network (e.g., CAN) of the vehicle 100.

The MG 11a functions as a motor for traveling. The inverter 11b functions as a power control unit (PCU) for the MG 11a. The inverter 11b drives the MG 11a with electric power supplied from the battery 21. The MG 11a converts the electric power into torque to rotate drive wheels of the vehicle 100. The MG 11a performs regenerative power generation, for example, when the vehicle 100 decelerates, and charges the battery 21.

Each of the DC inlet 14b and the AC inlet 15b includes a terminal that detects connection and disconnection of a charging cable (charging plug), and outputs, to the ECU 18b, a signal indicating whether the charging cable is connected. The ECU 18a acquires information indicating an inlet state from the ECU 18b, and transmits a control command to the ECU 18c. In the vehicle 100, charging control is performed by cooperation of the ECUs 18a to 18c. The DC inlet 14b receives DC power from outside the vehicle. When the battery 21 is charged with the DC power input to the DC inlet 14b, the ECU 18a closes the SMRs 13, 23 and the ECU 18c closes the DC charging relay 14a. The AC inlet 15b receives AC power from outside the vehicle. The AC charger 15a performs AC-DC conversion. The ECU 18c controls the AC charger 15a while both the SMRs 13 and 23 are closed and the AC power is input to the AC charger 15a from outside the vehicle via the AC inlet 15b. The AC charger 15a converts the AC power into DC power in accordance with a control command from the ECU 18c, and outputs the DC power to the battery 21.

The vehicle body 10 further includes a human-machine interface (HMI) 19a and a communication device 19b. The HMI 19a and the communication device 19b also receive electric power supplied from the auxiliary battery 17.

The HMI 19a includes an input device and a display device provided in a vehicle cabin. The HMI 19a may include a touch panel display. The input device may include an operation portion (e.g., buttons) provided on a steering wheel. The input device may include a smart speaker that receives voice inputs. The input device outputs a signal corresponding to an input from a user to the ECU 18a. The display device may include an instrument panel or a head-up display.

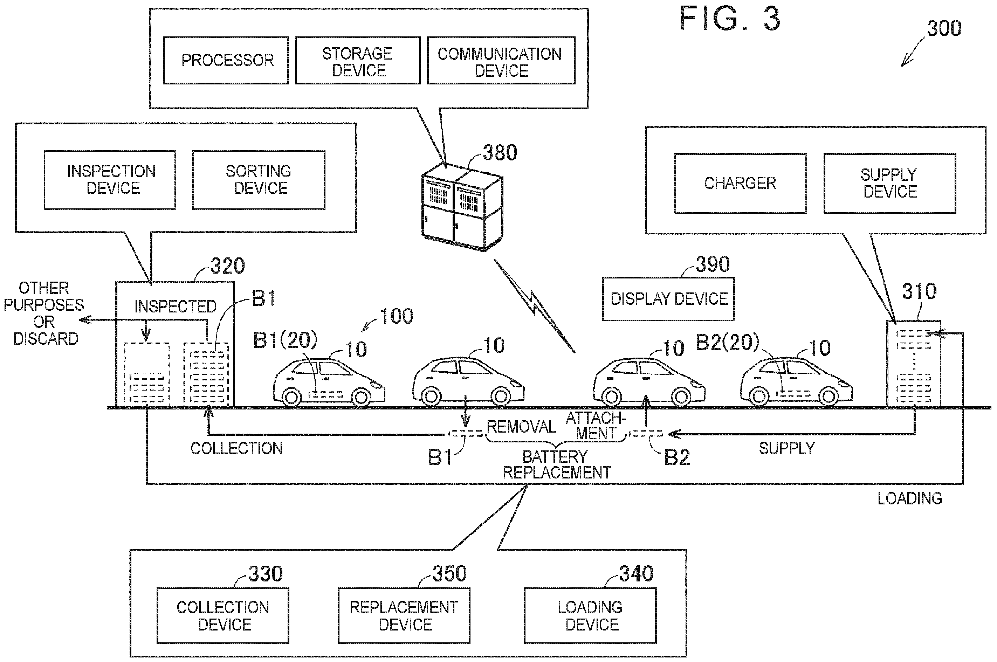

The communication device 19b is configured to wirelessly communicate with a mobile terminal 200 and a server 380 (FIG. 3) described later. The ECU 18a wirelessly communicates with the mobile terminal 200 via the communication device 19b. Examples of the mobile terminal 200 include a smartphone including a touch panel display. However, the mobile terminal 200 is not limited to this, and may also be a laptop, a portable gaming machine, a wearable device, an electronic key, etc.

The vehicle body 10 also includes various sensors (in-vehicle sensors 19c) (not shown). The in-vehicle sensors 19c may include a sensor that detects the state (current, voltage, temperature, etc.) of the auxiliary battery 17, a sensor that detects charging power (charging voltage and charging current), and a sensor that detects input power and output power of the inverter 11b. The ECU 18a is configured to acquire the detection results from these sensors directly or via other ECUs.

In the present embodiment, the HMI 19a includes a start switch. The start switch is commonly called "power switch" or "ignition switch". The start switch receives start and stop operations to request the start and stop of a control system (including each ECU) of the vehicle 100, respectively, and Ready-ON and Ready-OFF operations to request the vehicle 100 to come into a Ready-ON state and a Ready-OFF state, respectively. One user operation may correspond to a plurality of requests. For example, the start operation and the Ready-ON operation may be the same operation. The stop operation and the Ready-OFF operation may be the same operation. Each operation may be a remote operation (e.g., a request by wireless communication).

The Ready-ON state is a state in which the voltage of the battery 21 is applied to the circuit CR11. In the Ready-ON state, both the SMRs 13 and 23 are closed and electric power is supplied from the battery 21 to a vehicle drive device (e.g., the MG 11a and the inverter 11b). The Ready-OFF state is a state in which the voltage of the battery 21 is not applied to the circuit CR11. In the Ready-OFF state, at least one of the SMRs 13, 23 is open and electric power is not supplied from the battery 21 to the vehicle drive device.

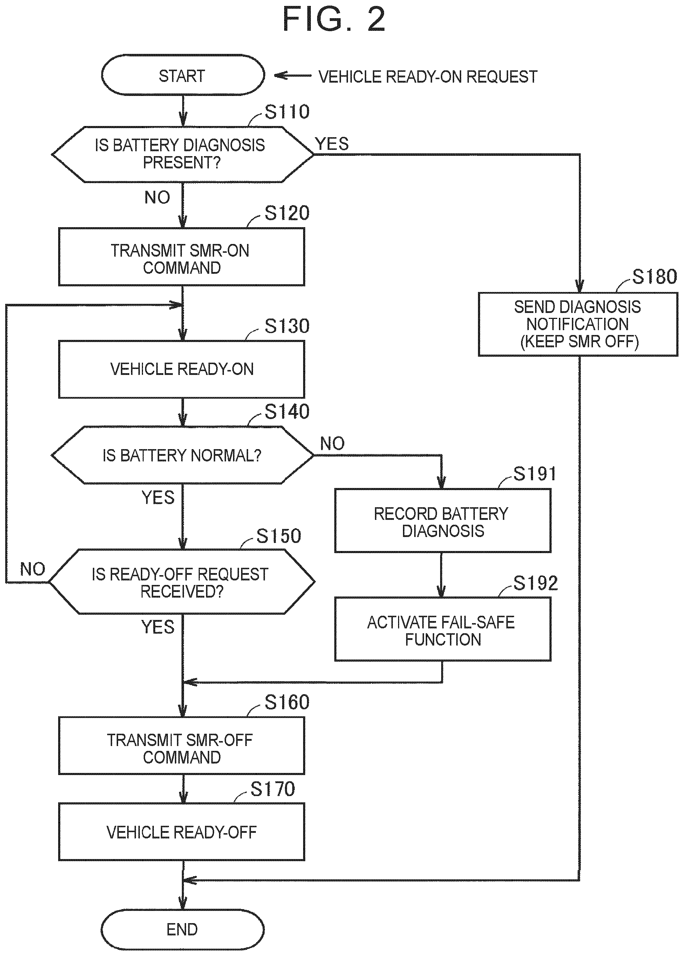

When an abnormality occurs in the battery 21, the ECU 18a according to the present embodiment stores information indicating the abnormality in the battery 21 (hereinafter referred to as "battery diagnosis") in its storage device. Specifically, when the HMI 19a (start switch) receives a start request (start operation) from the user, the control system (including each ECU) of the vehicle 100 starts up. In the present embodiment, both the SMRs 13 and 23 are open when the system starts up. When the HMI 19a (start switch) receives a Ready-ON request from the user, the ECU 18a starts a process flow shown in FIG. 2 described below.

FIG. 2 is a flowchart showing a process related to a self-diagnosis (OBD: on-board diagnosis) of the in-vehicle battery that is performed by the vehicle 100. The process shown in this flowchart is started in response to, for example, a Ready-ON operation. The symbol "S" in the flowchart means "step".

Referring to FIG. 2, the ECU 18a determines in S110 whether a battery diagnosis is present in the storage device of the ECU 18a. The absence of the battery diagnosis means that the battery 21 is normal. When no battery diagnosis is present (NO in S110), the ECU 18a in S120 transmits, to the ECU 28a, a signal for instruction to drive the SMR 23 to be closed (SMR-ON command). When the ECU 28a receives the SMR-ON command from the ECU 18a, the ECU 28a closes the SMR 23. Next, the ECU 18a closes the SMR 13 in S130. Thus, the vehicle 100 comes into the Ready-ON state. In S140, the ECU 18a determines whether the battery 21 is normal based on the state of the battery 21 detected by the BMS 22a. For example, the ECU 18a may acquire the current, voltage, and temperature of the battery 21 from the ECU 28a. The ECU 18a may determine that the battery 21 is normal when all the current, voltage, and temperature of the battery 21 are within normal ranges, and may determine that an abnormality has occurred in the battery 21 when at least one of the current, voltage, or temperature of the battery 21 is not within the normal range. When the battery 21 is normal (YES in S140), the process proceeds to S150.

In S 150, the ECU 18a determines whether a Ready-OFF request is received. While the ECU 18a has not received the Ready-OFF request (NO in S150), the process returns to S130, and S130, S140, and S150 are repeated. On the other hand, for example, when the HMI 19a (start switch) receives a Ready-OFF operation from the user, the determination result is YES in S150, and the process proceeds to S160. In S160, the ECU 18a transmits, to the ECU 28a, a signal for instruction to drive the SMR 23 to be opened (SMR-OFF command). When the ECU 28a receives the SMR-OFF command from the ECU 18a, the ECU 28a opens the SMR 23. Next, the ECU 18a opens the SMR 13 in S170. After confirming that the vehicle 100 has come into the Ready-OFF state, the ECU 18a ends the process flow shown in FIG. 2. When the HMI 19a further receives a stop request (stop operation) from the user, the control system of the vehicle 100 is stopped.

While the vehicle 100 is in the Ready-ON state, steps S130 to S150 are repeated as described above. Thus, the state of the battery 21 is monitored in S140. When an abnormality has occurred in the battery 21 (NO in S140), the process proceeds to S191. In S191, the ECU 18a records a battery diagnosis in its storage device. Next, the ECU 18a activates a fail-safe function of the vehicle 100 in S192. The fail-safe function may, for example, limit the output of the battery 21. The fail-safe function may also limit the operation of the vehicle drive device (e.g., the inverter 11b). When the ECU 18a receives a request to terminate the fail-safe function, the ECU 18a stops the fail-safe function, and the process proceeds to S160. Then, the vehicle 100 comes into the Ready-OFF state through the processes of S160 and S170. The fail-safe termination (termination of limitations) is prohibited when the vehicle 100 is traveling.

When the process flow shown in FIG. 2 ends through S191, S192, S160, and S170 because the determination result is NO in S140 and then the HMI 19a receives a Ready-ON request again, the process flow shown in FIG. 2 is started with the battery diagnosis recorded in the ECU 18a. In this case, determination is made in S110 that the battery diagnosis is present (YES in S110), and the process proceeds to S180. The presence of the battery diagnosis means that an abnormality has occurred in the battery 21. In S180, the ECU 18a sends a diagnosis notification to a user terminal of the vehicle 100 (e.g., the HMI 19a and/or the mobile terminal 200). The user terminal may be preregistered in the ECU 18a. The diagnosis notification is a notification for the user of the vehicle 100 about an abnormality in the battery 21. When the user terminal receives the diagnosis notification, the user terminal reports to the user by display or sound (including voice) that the abnormality has occurred in the battery 21. Then, the process flow shown in FIG. 2 ends with both the SMRs 13 and 23 remaining open.

The battery pack (battery pack 20) mounted on the vehicle 100 can be replaced with another battery pack. FIG. 3 shows an example of a configuration of a battery replacement system for replacing the battery pack. A battery replacement system 300 shown in FIG. 3 is implemented in, for example, a battery replacement station.

Referring to FIG. 3, the battery replacement system 300 removes the battery pack mounted on the vehicle 100 from the vehicle body 10, and attaches another battery pack to the vehicle body 10. Hereinafter, the battery pack (first power storage device) collected from the vehicle 100 will be referred to as "battery pack B1". The battery pack (second power storage device) attached to the vehicle 100 in place of the battery pack B1 will be referred to as "battery pack B2". Each of the battery packs B1, B2 has the same configuration as the battery pack 20 shown in FIG. 1. The battery pack B2 attached to the vehicle body 10 functions as the battery pack 20 (FIG. 1) in the vehicle 100.

Specifically, the battery replacement system 300 includes a first storage apparatus 310, a second storage apparatus 320, a collection device 330, a loading device 340, a replacement device 350, the server 380, and a display device 390. The first storage apparatus 310 stores a plurality of battery packs to be supplied to vehicles. The first storage apparatus 310 includes a pack housing portion (e.g., a storage facility) as well as a charger and a supply device. The second storage apparatus 320 stores a plurality of battery packs collected from a plurality of vehicles. The second storage apparatus 320 includes a pack housing portion (e.g., a storage facility) as well as an inspection device and a sorting device. The server 380 includes a processor, a storage device, and a communication device, and functions as a control device. The storage device stores information (e.g., specification information) on each battery pack present in the battery replacement system 300 while distinguishing the information with battery pack identification information (pack ID). The display device 390 displays information in accordance with an instruction from the server 380.

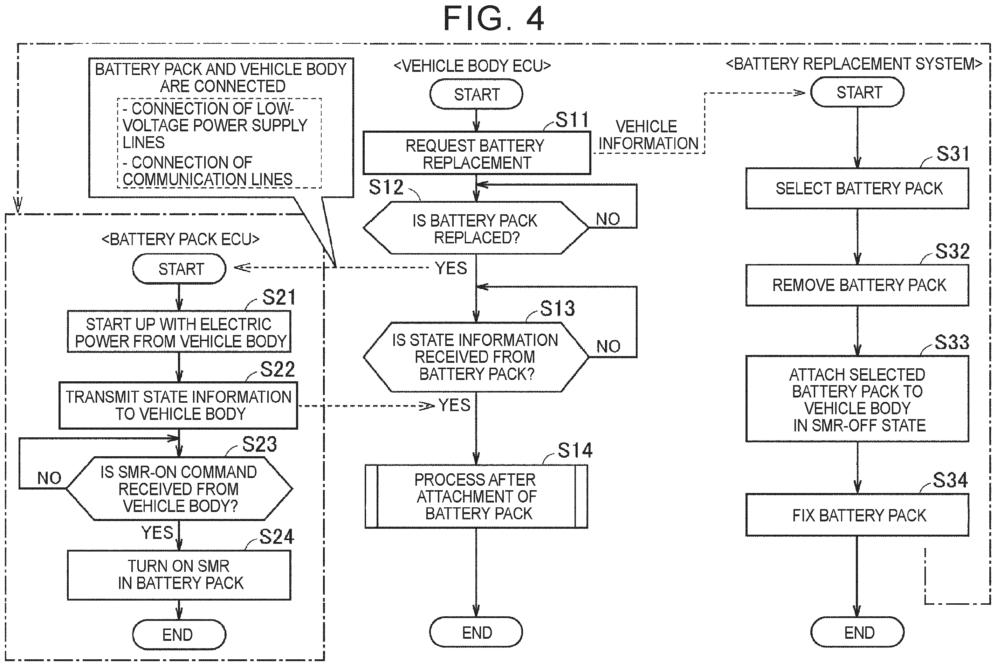

A battery replacement method will be described below with reference to FIGS. 1, 3, and 4. FIG. 4 is a flowchart showing a process related to the battery replacement method according to the present embodiment. The ECU 18a starts a process flow of S11 to S14 shown in FIG. 4, for example, after the vehicle 100 is parked in a predetermined area in the battery replacement station. The ECU 18a may start the process flow, for example, in response to a request from the user terminal of the vehicle 100. The ECU 18a and the server 380 are configured to wirelessly communicate with each other.

Referring to FIGS. 1, 3, and 4, the ECU 18a in S11 transmits, to the server 380, a signal for requesting replacement of the battery pack (hereinafter referred to as "replacement request signal"). The replacement request signal includes identification information of the vehicle 100 (vehicle ID) and specification information of the battery pack 20 mounted on the vehicle 100 (specification information of the battery pack B1). The replacement request signal may include specification information of the vehicle body 10 instead of or in addition to the specification information of the battery pack B1. In S12, the ECU 18a determines whether the battery pack has been replaced. While the battery pack replacement is not completed (NO in S12), the determination in S12 is repeated.

When the server 380 receives the replacement request signal, the server 380 starts a process flow of S31 to S34. In S31, the server 380 selects a battery pack that meets the specifications of the vehicle 100 (the specifications of the battery pack B1 or the vehicle body 10) indicated by the replacement request signal from among the battery packs (inventory) held by the first storage apparatus 310. When determination is made that the battery pack that meets the specifications of the vehicle 100 is not present in the inventory, the server 380 may cause the display device 390 to display a message for explaining the situation and terminate the battery replacement process. When the battery pack is selected in S31, the server 380 controls the replacement device 350 so that the battery pack B1 is removed from the vehicle body 10 in subsequent S32. Thus, the vehicle body 10 and the battery pack B 1 are separated.

Although description is not given in the flowchart, a reuse process is performed on the removed battery pack B1. Specifically, the collection device 330 transports (collects) the battery pack B1 from the replacement device 350 to the second storage apparatus 320. The battery packs stored in the second storage apparatus 320 are sequentially inspected by the inspection device, and the sorting device sorts the battery packs by purpose based on the inspection results. Each battery pack is reused for a corresponding purpose (vehicle use, stationary use, etc.). Battery packs that cannot be reused are discarded. The battery packs (for vehicle use) to be reused in the battery replacement system 300 are transported to the first storage apparatus 310 by the loading device 340. The transported battery packs are loaded into the first storage apparatus 310.

In S33, the server 380 controls the charger of the first storage apparatus 310 to charge the battery 21 in the battery pack selected in S31 (battery pack B2). By charging the battery immediately before it is supplied to the vehicle, deterioration of the battery is suppressed. However, the charging timing is not limited to this, and can be changed as appropriate. For example, the charging of the battery pack may be started at a timing when the battery pack is loaded into the first storage apparatus 310. When the charging is completed, the server 380 controls the supply device of the first storage apparatus 310 to transport (supply) the battery pack B2 from the first storage apparatus 310 to the replacement device 350. Next, the server 380 controls the replacement device 350 to attach the battery pack B2 to the vehicle body 10. At this time, the SMR 23 of the battery pack B2 is open. In S34, the server 380 controls the replacement device 350 to fix the battery pack B2 to the vehicle body 10 (e.g., fasten the battery pack B2 with bolts). After the battery pack B2 is fixed, the server 380 transmits, to the ECU 18a, a signal for notification about the completion of the attachment of the battery pack (hereinafter referred to as "replacement completion signal").

FIG. 3 shows an example in which the removal and attachment of the battery packs are performed at different positions. The vehicle position may be adjusted before removing the battery pack, before attaching the battery pack, or both. A transport device (e.g., a conveyor-kind transport device) (not shown) or a transport robot (not shown) may move the vehicle. The removal and attachment of the battery packs may be performed at the same position. The battery pack replacement (removal and attachment) may be performed with the vehicle kept stationary. Any transport method may be used also in each of the collection device 330, the supply device, and the loading device 340. The transport method may be a conveyor method or a method using a transport robot.

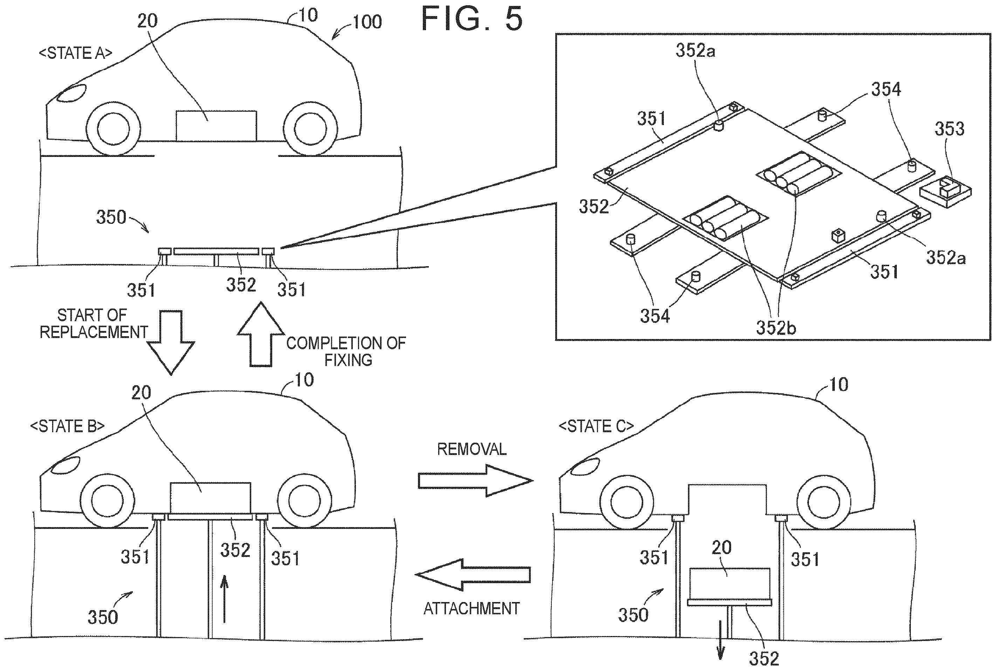

FIG. 5 shows an example of the replacement device 350. Referring to FIG. 5, the replacement device 350 replaces the battery pack attached to the vehicle body with another battery pack. Specifically, the replacement device 350 includes vehicle body holding portions 351, a battery holding portion 352, a battery adjustment portion 353, and battery fixing portions 354. The battery holding portion 352 includes a plate-shaped member, and positioning pins 352a and transport portions 352b provided on the plate-shaped member. The transport portion 352b includes, for example, rollers that can ascend, descend, and rotate. The battery adjustment portion 353 is configured to adjust the position and angle of the battery pack held on the battery holding portion 352 by changing the position and angle of a positioning member (e.g., an L-shaped block disposed at the corner of the battery pack). The battery fixing portions 354 are connected to the battery holding portion 352. The battery fixing portions 354 fix the battery pack held on the battery holding portion 352 to the vehicle body and unfix the battery pack from the vehicle body using an electric power tool. The battery fixing portion 354 may be provided with an electric power tool for tightening and loosening bolts. Although illustration is omitted, the replacement device 350 further includes actuators (e.g., motors) that drive the individual portions.

The replacement device 350 replaces the battery pack of the vehicle 100, for example, in the following procedure. Before the replacement work is started, the replacement device 350 is in state A shown in FIG. 5. That is, the vehicle body holding portions 351 and the battery holding portion 352 are positioned below the vehicle 100. The replacement device 350 may detect the position of the vehicle 100 using various sensors and/or cameras. When the replacement device 350 receives, from the server 380, a command to remove the battery pack (S32 in FIG. 4), the vehicle body holding portions 351 and the battery holding portion 352 ascend toward the vehicle 100 and the replacement device 350 comes into state B shown in FIG. 5. Although illustration is omitted, the battery adjustment portion 353 also ascends to the same height as that of the battery holding portion 352 in state B. In state B, the vehicle body 10 is held on the vehicle body holding portions 351. The vehicle body holding portions 351 may lift the vehicle body 10 and hold the vehicle body 10 in a floating state. The battery pack 20 (battery pack B1) is held on the battery holding portion 352. At this time, the positioning pins 352a are inserted into holes provided in the bottom surface of the battery pack 20. Thus, the battery pack 20 and the battery holding portion 352 (and the battery fixing portions 354) have a predetermined positional relationship. Then, the battery fixing portions 354 unfix (e.g., unfasten bolts of) the battery pack 20 from the vehicle body 10. Thus, the vehicle body 10 and the battery pack 20 are separable. After the unfixing, the battery holding portion 352 holding the battery pack 20 descends away from the vehicle body 10, and the replacement device 350 comes into state C shown in FIG. 5. Thus, the battery pack 20 is removed from the vehicle body 10. Although illustration is omitted, the battery adjustment portion 353 also descends to the same height as that of the battery holding portion 352 in state C. Next, the transport portions 352b separate the battery pack 20 held on the battery holding portion 352 from the positioning pins 352a, and transport the battery pack 20 to the collection device 330 (FIG. 3).

Then, the battery pack 20 (battery pack B2) is supplied from the first storage apparatus 310 to the battery holding portion 352 based on a battery pack attachment command from the server 380 (S33 in FIG. 4). The position and angle of the battery pack 20 are adjusted by the battery adjustment portion 353 so that the positioning pins 352a are inserted into holes provided in the bottom surface of the battery pack 20. Next, the battery holding portion 352 ascends toward the vehicle body 10 while holding the battery pack 20, and the replacement device 350 comes into state B again. Thus, the battery pack 20 held on the battery holding portion 352 is attached to the vehicle body 10. When the replacement device 350 receives a battery pack fixing command from the server 380 (S34 in FIG. 4), the battery fixing portions 354 fix the battery pack 20 held on the battery holding portion 352 to the vehicle body 10 (e.g., fasten the battery pack 20 with bolts). After the fixing is completed, the vehicle body holding portions 351 and the battery holding portion 352 descend away from the vehicle body 10, and the replacement device 350 returns to state A. Thus, the replacement work is completed. The configuration of the replacement device and the procedure of the replacement work are merely examples and can be changed as appropriate. The automation of the replacement work is not essential. The user may manually replace the battery pack (power storage device) without communication between the battery replacement system (station) and the vehicle.

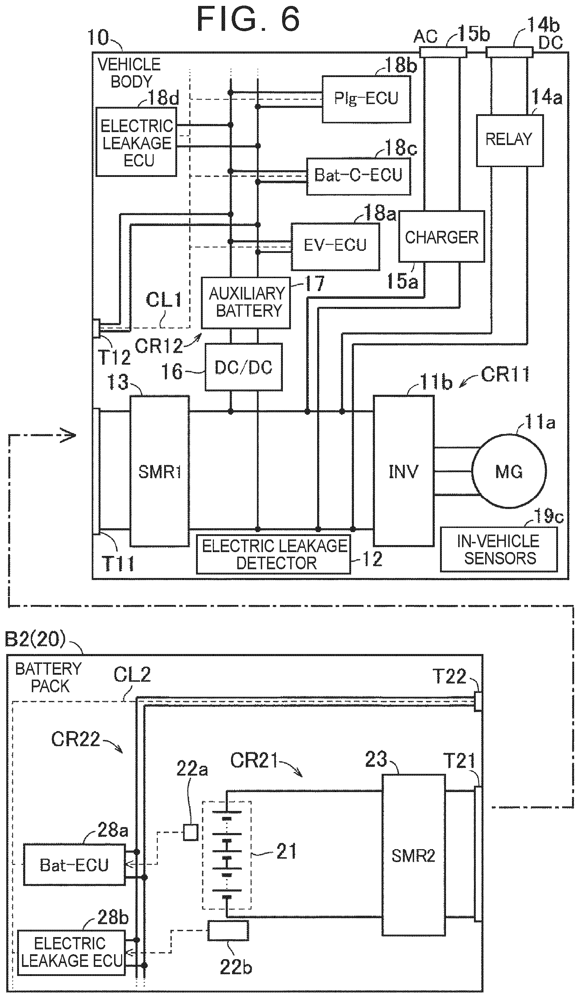

FIG. 6 illustrates how the terminals T11, T12 of the vehicle body 10 and the terminals T21, T22 of the battery pack B2 are connected. Referring to FIG. 6, when the battery pack B2 is attached to the vehicle body 10 in the above procedure, the terminals T21, T22 of the battery pack B2 are connected to the terminals T11, T12 of the vehicle body 10, respectively. Thus, the vehicle body 10 and the battery pack B2 are connected as shown in FIG. 1. By attaching the battery pack B2 to the vehicle body 10, the low-voltage power supply lines (circuits CR12, CR22) and the communication lines (communication lines CL1, CL2) are connected between the vehicle body 10 and the battery pack B2. Then, a process flow of S21 to S24 shown in FIG. 4 is started.

Referring back to FIG. 4, the ECU 28a in the battery pack B2 is started up with electric power supplied from the power supply (auxiliary battery 17) in the vehicle body 10 in S21. In S22, the started ECU 28a transmits information on the state of the battery pack B2 (state information) to the ECU 18a. In the present embodiment, the state information indicates a current voltage of the battery 21 detected by the BMS 22a. The voltage of the battery 21 may vary depending on the state of charge (SOC) of the battery 21. The SOC indicates the remaining charge. For example, the SOC is the ratio of a currently stored charge to a charge stored in a fully charged state, and is expressed within a range of 0% to 100%.

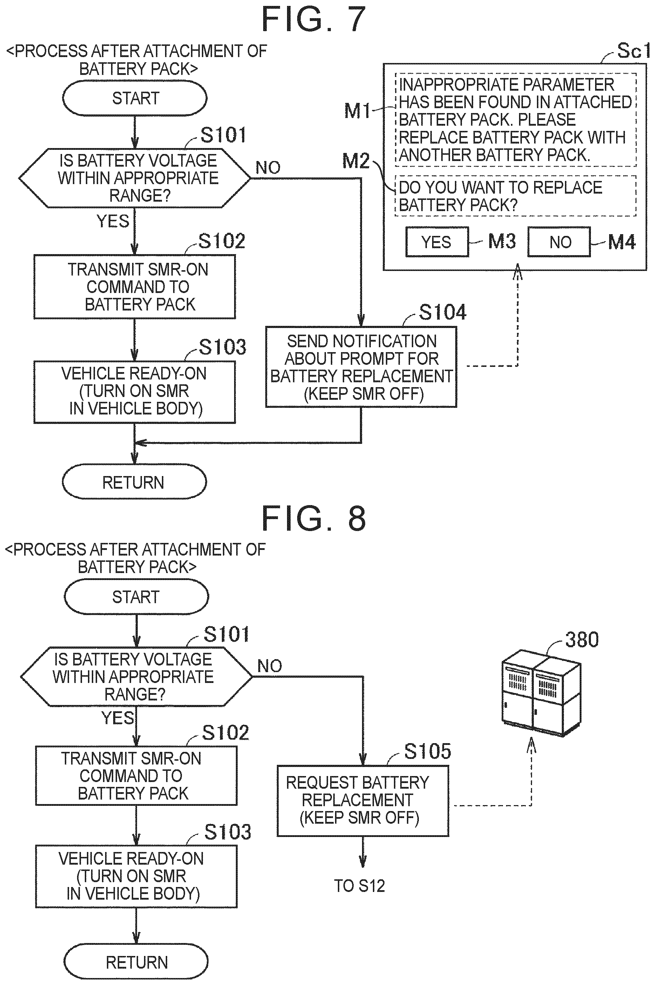

After the state information is transmitted, the ECU 28a determines in S23 whether an SMR-ON command (S102 in FIG. 7 described later) is received from the vehicle body 10. The ECU 28a waits for the SMR-ON command from the vehicle body 10 in S23 with the SMR 23 kept open. When the ECU 28a receives the SMR-ON command (YES in S23), the ECU 28a switches the SMR 23 from the open state (disconnected state) to the closed state (connected state) in S24. The ECU 28a keeps the SMR 23 in the open state until the SMR-ON command is received from the vehicle body 10 after the battery pack B2 is attached to the vehicle body 10.

When the battery pack B2 is attached to the vehicle body 10, the ECU 18a receives the replacement completion signal from the server 380 (S34). Thus, the determination result is YES in S12, and the process proceeds to S13. In S13, the ECU 18a determines whether the state information is received from the ECU 28a. When the ECU 18a receives the state information (YES in S13), the ECU 18a performs a process flow shown in FIG. 7 in S14. The ECU 18a keeps the SMRs 13 and 23 in the open state until the state information is acquired from the battery pack B2 after the battery pack B2 is attached to the vehicle body 10. Therefore, when the state information issued from the battery pack B2 does not reach the vehicle body 10 due to a communication abnormality or other factors, the voltage of the battery 21 is not applied to the circuit CR11.

FIG. 7 is a flowchart showing a process that is performed by the ECU 18a in the vehicle body 10 after the battery pack B2 is attached to the vehicle body 10. Referring to FIG. 7, the ECU 18a determines in S101 whether the voltage of the battery 21 in the battery pack B2 is within a predetermined first range based on the state information acquired from the ECU 28a (S22 in FIG. 4). The first range indicates a condition under which the battery pack B2 can operate normally in the vehicle 100, and more specifically, corresponds to an appropriate voltage range of the battery 21. The first range may be set to be adapted to the vehicle drive system of the vehicle 100 (e.g., the circuit CR11 and the control system).

When the voltage of the battery 21 is within the first range (YES in S101), the ECU 18a in S102 transmits, to the ECU 28a, a signal for instruction to drive the SMR 23 to be closed (SMR-ON command). Thus, the SMR 23 is closed (S24 in FIG. 4). In S103, the ECU 18a switches the SMR 13 from the open state (disconnected state) to the closed state (connected state). Thus, the vehicle 100 comes into the Ready-ON state, and the voltage of the battery 21 in the battery pack B2 is applied to the circuit CR11. Then, S14 in FIG. 4 and therefore the process flow related to the battery replacement end.

When the voltage of the battery 21 is not within the first range (NO in S101), the ECU 18a in S104 notifies the user terminal of the vehicle 100 (e.g., the HMI 19a and/or the mobile terminal 200) about a prompt for replacement of the battery pack. Thus, S14 in FIG. 4 and the process flow related to the battery replacement end.

When the user terminal receives the notification in S104, the user terminal displays, for example, a screen Sc1. In other words, the ECU 18a transmits a notification that prompts for replacement of the battery pack to the user terminal of the vehicle 100 and the user terminal of the vehicle 100 displays the notification after receiving the notification. The screen Sc1 shows messages M1, M2 and operation portions M3, M4. The message M1 prompts the user of the vehicle 100 to replace the battery pack. The message M2 provides an explanation about the operation portions M3, M4. When the operation portion M3 is operated, the user terminal requests the ECU 18a to replace the battery pack, and then ends the display of the screen Sc1. In response to the request from the user terminal, the ECU 18a starts again the process flow of S11 to S14 shown in FIG. 4. Thus, the battery pack B2 mounted on the vehicle 100 is replaced with another battery pack. When the operation portion M4 is operated, the user terminal ends the display of the screen Sc1 without requesting the replacement of the battery pack.

As described above, the battery replacement method according to the present embodiment includes the processes shown in FIGS. 4 and 7. In S32 of FIG. 4, the battery pack B1 is removed from the vehicle 100 including the vehicle body 10 including the circuit CR11 and the ECU 18a, and the battery pack B1 including the first battery (battery 21). In S33 of FIG. 4, the battery pack B2 including the ECU 28a and the circuit CR21 including the second battery (battery 21) is attached to the vehicle body 10 in place of the battery pack B1. With the battery pack B2 attached to the vehicle body 10, the ECU 18a waits to receive the state information on at least one of the state of the second battery or the state of the circuit CR21 in the battery pack B2 (S13 in FIG. 4), and acquires the state information from the ECU 28a through the process of S22 in FIG. 4. In S101 of FIG. 7, the ECU 18a uses the state information acquired from the ECU 28a to determine whether to apply the voltage of the second battery to the circuit CR11.

In the vehicle 100 of the present embodiment, when the battery pack 20 (power storage device) is attached to the vehicle body 10, the ECU 18a (first control device) in the vehicle body 10 acquires the state information from the battery pack 20, and uses the state information to determine whether to apply the voltage of the battery 21 included in the circuit CR21 (second circuit) in the battery pack 20 to the circuit CR11 (first circuit) in the vehicle body 10. Specifically, the ECU 28a (second control device) in the battery pack 20 acquires the voltage of the battery 21, and transmits the state information indicating the voltage of the battery 21 to the ECU 18a. When the battery pack 20 is attached to the vehicle body 10 and the voltage of the battery 21 is within the first range, the ECU 18a applies the voltage of the battery 21 to the circuit CR11. When the voltage of the battery 21 is not within the first range, the ECU 18a does not apply the voltage of the battery 21 to the circuit CR11 (see FIG. 7).

According to the above configuration, it is possible to determine whether to apply the voltage of the battery 21 to the vehicle body 10 (circuit CR11) based on the state (e.g., voltage) of the battery 21 immediately before the voltage application. When the battery pack 20 attached to the vehicle body 10 is not operable normally in the vehicle 100, it is possible to prevent the voltage of the battery 21 from being applied to the vehicle body 10 (circuit CR11). Therefore, malfunctions in the vehicle 100 that may be caused by the battery 21 attached to the vehicle body 10 are suppressed. For example, the activation of the fail-safe function (see S192 in FIG. 2) during use of the vehicle 100 is suppressed.

In the above embodiment, when the ECU 18a determines not to apply the voltage of the battery 21 to the circuit CR11 (NO in S101 in FIG. 7), the predetermined notification is given to the user of the vehicle 100. Specifically, the ECU 18a gives a notification about a prompt for replacement of the battery pack. With such a notification, the battery pack 20 that does not operate normally can easily be replaced with another battery pack before the battery pack 20 applies the voltage to the vehicle body 10 (circuit CR11).

The process to be performed when determination is made not to apply the battery voltage is not limited to the above notification. For example, the ECU 18a may perform a process flow shown in FIG. 8 instead of the process flow shown in FIG. 7. FIG. 8 is a flowchart showing a first modification of the process shown in FIG. 7. In the process flow according to the first modification, S104 (FIG. 7) is changed to S105.

Referring to FIG. 8, the ECU 18a requests the server 380 to replace the battery pack in S 105. Specifically, the ECU 18a transmits a replacement request signal to the server 380. Thus, the process flow of S31 to S34 shown in FIG. 4 is started again. Then, the ECU 18a returns the process to S12 in FIG. 4.

In the first modification, when the ECU 18a determines not to apply the voltage of the battery 21 to the circuit CR11 (NO in S101 in FIG. 8), the ECU 18a requests the battery replacement system 300 (server 380) to replace the battery pack B2 attached to the vehicle body 10. With such a request, the battery pack B2 that does not operate normally can easily be replaced with another battery pack before the battery pack B2 applies the voltage to the vehicle body 10 (circuit CR11).

In the above embodiment, the ECU 18a determines whether to apply the voltage of the battery 21 to the circuit CR11 (first circuit) in the vehicle body 10 based on the voltage value of the battery 21 acquired from the battery pack 20 (S 101 in FIG. 7). However, the present disclosure is not limited to this, and the ECU 18a may determine whether to apply the battery voltage based on a parameter other than the voltage.

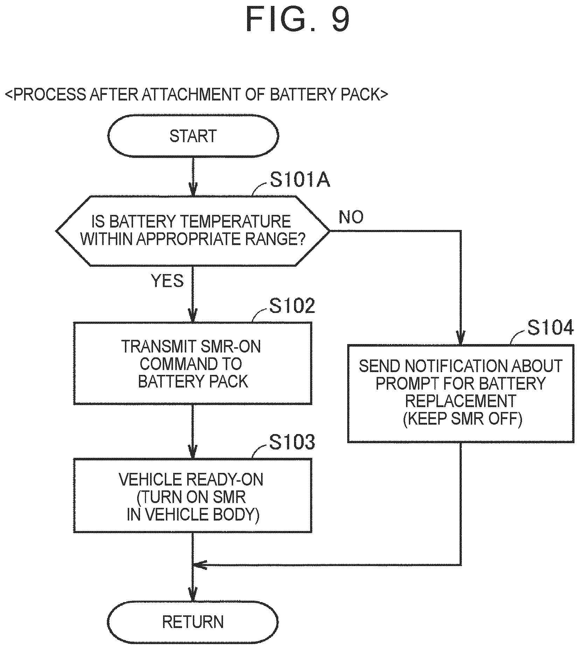

The ECU 18a may perform a process flow shown in FIG. 9 instead of the process flow shown in FIG. 7. FIG. 9 is a flowchart showing a second modification of the process shown in FIG. 7. In the process flow according to the second modification, S101 (FIG. 7) is changed to S101A. In the second modification, the ECU 28a in the battery pack B2 transmits, in S22 in FIG. 4, state information indicating the current temperature of the battery 21 detected by the BMS 22a to the ECU 18a. Since the battery 21 in the battery pack B2 is charged by the charger of the first storage apparatus 310 (FIG. 3) and then supplied to the vehicle body 10, the battery 21 may have a high temperature due to the temperature rise during the charging.

Referring to FIG. 9, the ECU 18a determines in S101A whether the temperature of the battery 21 in the battery pack B2 is within a predetermined second range based on the state information acquired from the ECU 28a. The second range indicates a condition under which the battery pack B2 can operate normally in the vehicle 100, and more specifically, corresponds to an appropriate temperature range of the battery 21. When the temperature of the battery 21 is within the second range (YES in S101A), the ECU 18a applies the voltage of the battery 21 to the circuit CR11 through the processes of S102 and S103. When the temperature of the battery 21 is not within the second range (NO in S101A), the ECU 18a does not apply the voltage of the battery 21 to the circuit CR11. With this configuration as well, malfunctions in the vehicle 100 that may be caused by the battery 21 attached to the vehicle body 10 are suppressed.

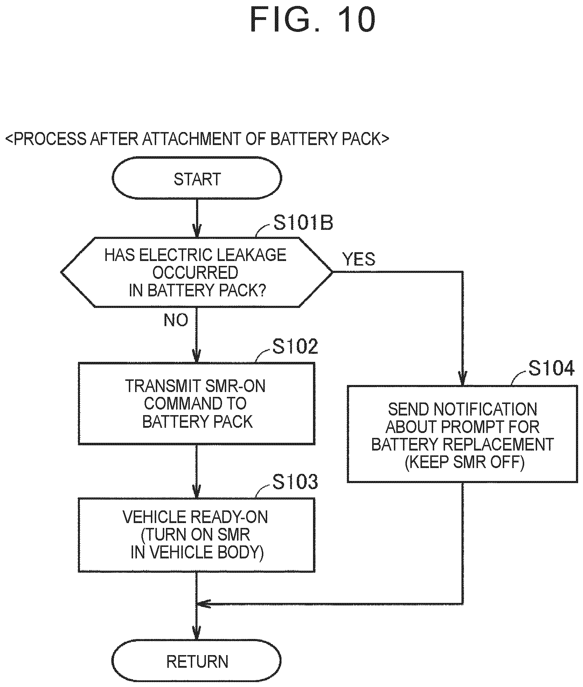

The ECU 18a may perform a process flow shown in FIG. 10 instead of the process flow shown in FIG. 7. FIG. 10 is a flowchart showing a third modification of the process shown in FIG. 7. In the process flow according to the third modification, S101 (FIG. 7) is changed to S101B. In the third modification, the ECU 28a in the battery pack B2 transmits, in S22 in FIG. 4, state information indicating the current electric leakage state (e.g., insulation resistance) of the circuit CR21 detected by the electric leakage detector 22b to the ECU 18a.

Referring to FIG. 10, the ECU 18a determines in S101B whether electric leakage has occurred in the circuit CR21 based on the state information acquired from the ECU 28a. For example, when the insulation resistance of the circuit CR21 in the battery pack B2 is not within a predetermined third range, the ECU 18a determines that electric leakage has occurred in the circuit CR21. When no electric leakage has occurred in the circuit CR21 (NO in S101B), the ECU 18a applies the voltage of the battery 21 to the circuit CR11 through the processes of S102 and S103. When electric leakage has occurred in the circuit CR21 (YES in S101B), the ECU 18a does not apply the voltage of the battery 21 to the circuit CR11. With this configuration as well, malfunctions in the vehicle 100 that may be caused by the battery 21 attached to the vehicle body 10 are suppressed.

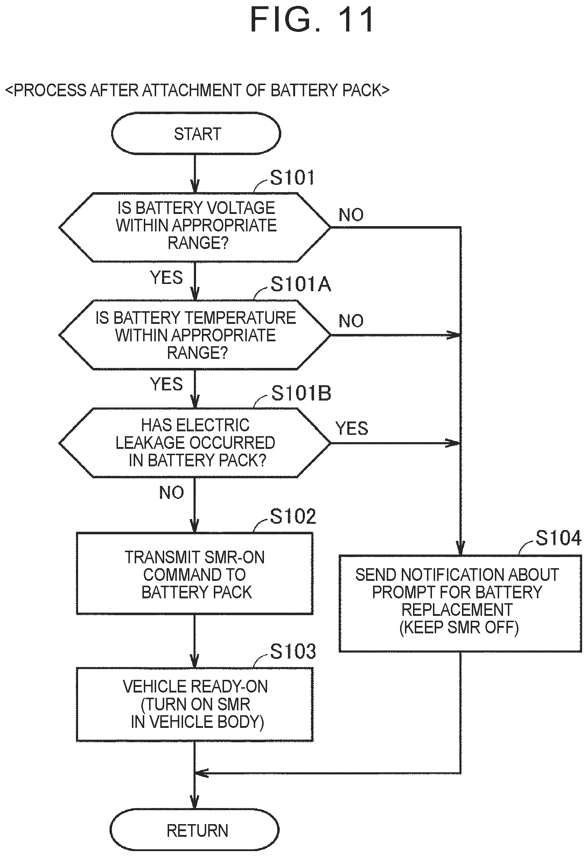

The ECU 18a may determine whether to apply the battery voltage based on two or more kinds of parameter selected as appropriate from among the above three kinds of parameter (battery voltage, battery temperature, and electric leakage state). The ECU 18a may perform a process flow shown in FIG. 11 instead of the process flow shown in FIG. 7. FIG. 11 is a flowchart showing a fourth modification of the process shown in FIG. 7. In the process flow according to the fourth modification, S101A and S101B are added. In the fourth modification, the ECU 28a in the battery pack B2 transmits, in S22 in FIG. 4, state information indicating the voltage of the battery 21, the temperature of the battery 21, and the electric leakage state of the circuit CR21 to the ECU 18a.

Referring to FIG. 11, when all of the following requirements are satisfied (S101: YES, S101A: YES, S101B: NO): the voltage of the battery 21 is within the first range (first requirement), the temperature of the battery 21 is within the second range (second requirement), and no electric leakage has occurred in the circuit CR21 (third requirement), the ECU 18a applies the voltage of the battery 21 to the circuit CR11 through the processes of S102 and S103. When any of the first to third requirements is not satisfied, the ECU 18a does not apply the voltage of the battery 21 to the circuit CR11. With this configuration as well, malfunctions in the vehicle 100 that may be caused by the battery 21 attached to the vehicle body 10 are suppressed.

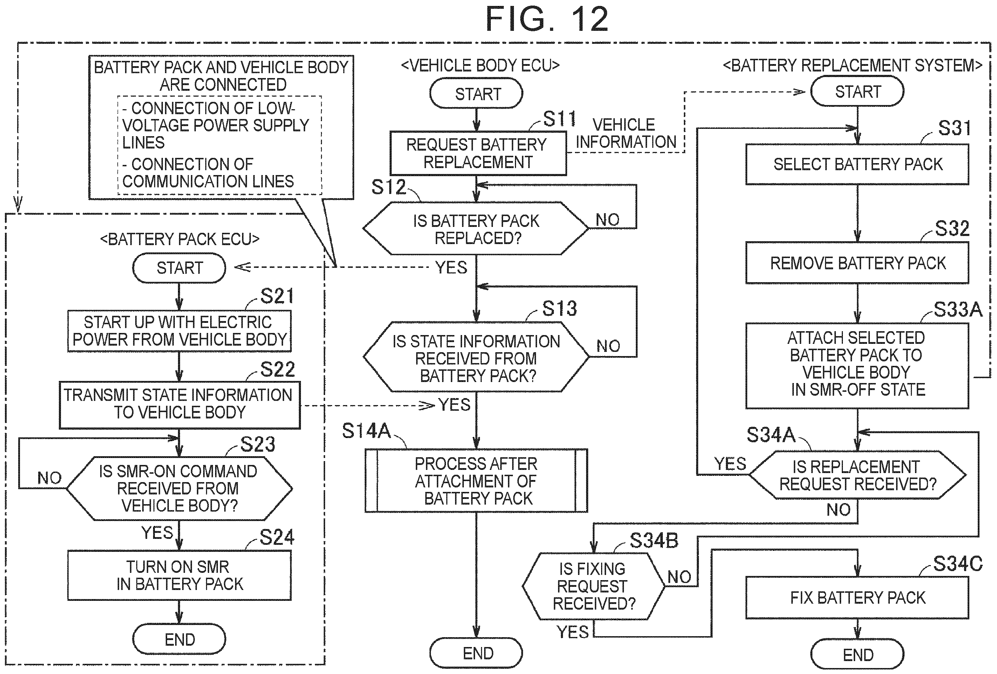

In the above embodiment, the ECU 18a determines whether to apply the voltage of the battery 21 in the battery pack B2 to the circuit CR11 after the battery replacement system 300 has fixed the battery pack B2 to the vehicle body 10. However, the present disclosure is not limited to this, and the ECU 18a may determine whether to apply the voltage of the battery 21 in the battery pack B2 to the circuit CR11 before the battery pack B2 is fixed. FIG. 12 is a flowchart showing a first modification of the battery replacement method shown in FIG. 4.

The battery replacement method shown in FIG. 12 is the same as the battery replacement method shown in FIG. 4 except that S14A is adopted instead of S14 (FIG. 4) and S33A and S34A to S34C are adopted instead of S33 and S34 (FIG. 4).

Referring to FIG. 12, in this modification, the server 380 transmits a replacement completion signal to the ECU 18a after the battery pack B2 is attached to the vehicle body 10 in S33A and before the battery pack B2 is fixed to the vehicle body 10. When the ECU 18a receives the replacement completion signal, the determination result is YES in S12.

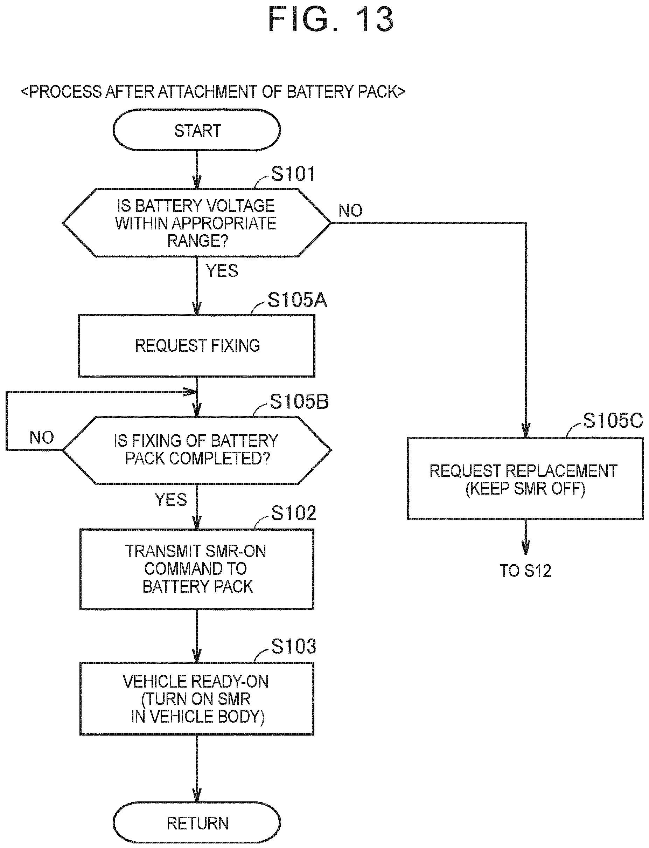

After the replacement completion signal is transmitted, the server 380 determines whether a replacement request and a fixing request are received from the vehicle body 10 in S34A and S34B, respectively. While the server 380 has not received either request (NO in both S34A and S34B), the determinations in S34A and S34B are repeated. When the server 380 receives the replacement request (S105C in FIG. 13 described later) (YES in S34A), the process returns to S31. The server 380 selects another battery pack in S31, removes the battery pack B2 from the vehicle body 10 in S32, and attaches the battery pack selected in S31 to the vehicle body 10 in S33A. When the server 380 receives the fixing request (S105A in FIG. 13 described later) (YES in S34B), the process proceeds to S34C. In S34C, the battery pack (e.g., the battery pack B2) attached to the vehicle body 10 in S33A is fixed to the vehicle body 10. After the battery pack is fixed, the server 380 transmits, to the ECU 18a, a signal for notification about the completion of the fixing of the battery (hereinafter referred to as "replacement fixing signal").

In S14A, the ECU 18a performs a process flow shown in FIG. 13 instead of the process flow shown in FIG. 7. FIG. 13 is a flowchart showing a process that is performed by the ECU 18a in the vehicle body 10 after the battery pack B2 is attached to the vehicle body 10. In this flowchart, S105A to S105C are adopted instead of S104 (FIG. 7).

Referring to FIG. 13, in this process flow, when determination is made that the voltage of the battery 21 in the battery pack B2 is within the first range (YES in S101), the ECU 18a transmits a signal for requesting fixing of the battery pack B2 (fixing request) to the server 380 in S105A. In S105B, the ECU 18a determines whether the fixing of the battery pack B2 is completed based on whether the replacement fixing signal is received from the server 380. When the battery pack B2 is fixed to the vehicle body 10 through the process of S34C in FIG. 12 and the replacement fixing signal is transmitted from the server 380 to the ECU 18a, the determination result is YES in S105B, and the process proceeds to S102. The voltage of the battery 21 is applied to the circuit CR11 through the processes of S102 and S103. When determination is made that the voltage of the battery 21 in the battery pack B2 is not within the first range (NO in S101), the ECU 18a transmits a signal for requesting replacement of the battery pack B2 with another battery pack (replacement request) to the server 380 in S105C. Then, the ECU 18a returns the process to S12 in FIG. 12.

In the battery replacement method shown in FIGS. 12 and 13, the ECU 18a determines whether to apply the voltage of the battery 21 in the battery pack B2 to the circuit CR11 (S101) before the battery replacement system 300 fixes the battery pack B2 to the vehicle body 10. When the ECU 18a determines to apply the voltage of the battery 21 to the circuit CR11, the ECU 18a requests the battery replacement system 300 to fix the battery pack B2 to the vehicle body 10 (S105A). When the ECU 18a determines not to apply the voltage of the battery 21 to the circuit CR11, the ECU 18a requests the battery replacement system 300 to remove the battery pack B2 from the vehicle body 10 (S105C). In this configuration, the battery pack is not fixed when the removal of the battery pack is requested in S105C. Therefore, it is possible to save time and labor for unfixing when removing the battery pack.

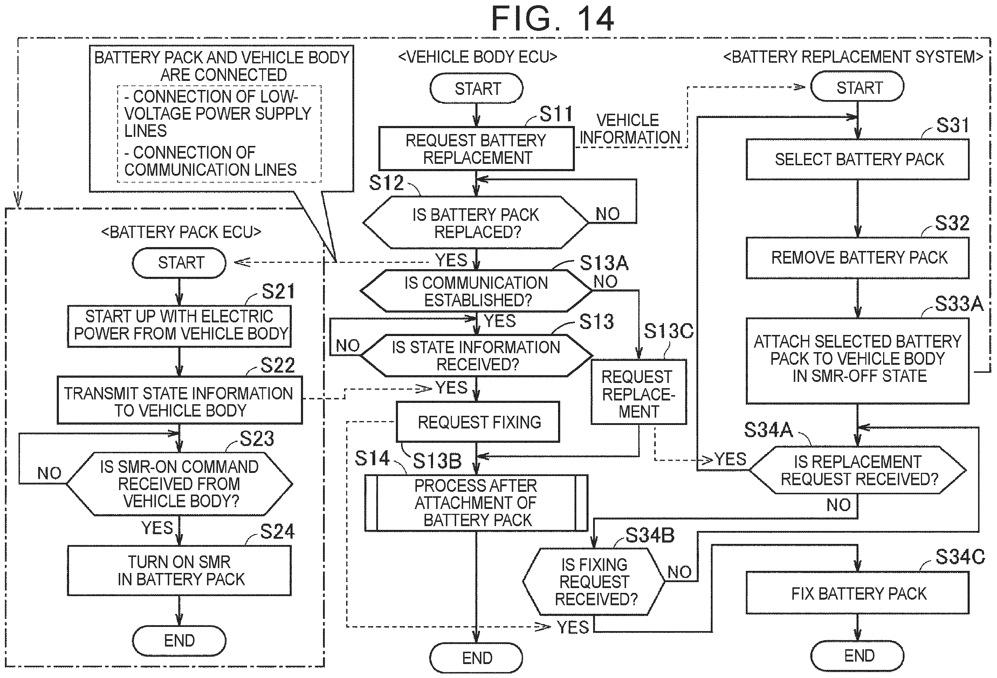

FIG. 14 is a flowchart showing a second modification of the battery replacement method shown in FIG. 4. The battery replacement method shown in FIG. 14 is the same as the battery replacement method shown in FIG. 4 except that S13A to S13C are added and S33A and S34A to S34C are adopted instead of S33 and S34 (FIG. 4). The adoption of S33A and S34A to S34C is similar to that in the battery replacement method shown in FIG. 12, and therefore description thereof will be omitted.

Referring to FIG. 14, in this process flow, when the ECU 18a receives a replacement completion signal (S33A) from the server 380 (YES in S12), the ECU 18a determines in S13A whether communication with the ECU 28a is established. When the communication between the ECU 18a and the ECU 28a is normal (YES in S13A), the process proceeds to S13. When the ECU 18a receives state information from the ECU 28a (YES in S13), the ECU 18a transmits a signal for requesting fixing of the battery pack (fixing request) to the server 380 in S13B. The process then proceeds to S14. When an abnormality has occurred in the communication between the ECU 18a and the ECU 28a (NO in S13A), the ECU 18a transmits a signal for requesting replacement of the battery pack (replacement request) to the server 380 in S13C. The process then proceeds to S14.

In the battery replacement method shown in FIG. 14, the ECU 18a determines whether the communication between the ECU 18a and the ECU 28a is normal (S13A) before the battery replacement system 300 fixes the battery pack B2 to the vehicle body 10. When the ECU 18a determines that an abnormality has occurred in the communication, the ECU 18a requests the battery replacement system 300 to remove the battery pack B2 from the vehicle body 10 (S13C). With this configuration as well, it is possible to save time and labor for unfixing when removing the battery pack.

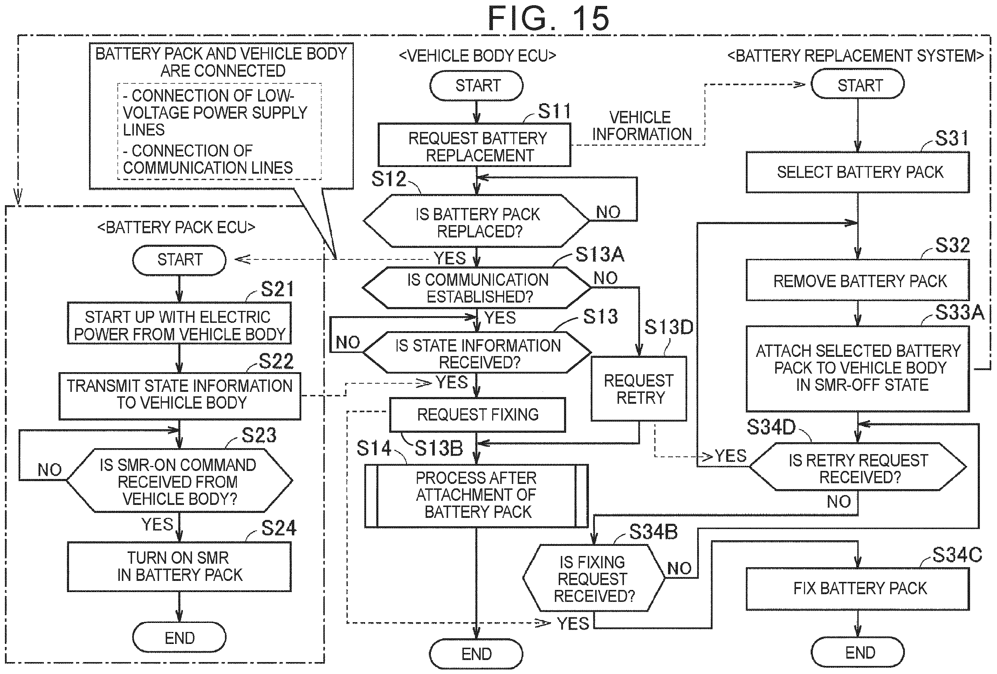

FIG. 15 is a flowchart showing a modification of the battery replacement method shown in FIG. 14. The battery replacement method shown in FIG. 15 is the same as the battery replacement method shown in FIG. 14 except that S13D and S34D are adopted instead of S13C and S34A (FIG. 14). Referring to FIG. 15, the ECU 18a in S13D transmits, to the server 380, a signal for requesting reattachment of the battery pack B2 (retry request). In S34D, the server 380 determines whether the retry request is received from the vehicle body 10. When the server 380 receives the retry request, the process returns to S32. The server 380 removes the battery pack B2 from the vehicle body 10 in S32, and reattaches the battery pack B2 to the vehicle body 10 in S33A.

In the battery replacement method shown in FIG. 15, when a communication abnormality has occurred between the vehicle body and the battery pack, the same battery pack is reattached without changing the battery pack. When the communication abnormality is caused by an error in the battery pack attachment, the communication abnormality may be resolved by reattaching the battery pack. With the above configuration, inventory shortages of battery packs are suppressed.

The configuration of the vehicle body shown in FIG. 1 may be changed as appropriate. For example, at least one of the DC inlet 14b or the AC inlet 15b may be omitted, or may be changed to one inlet common to AC and DC. The vehicle body may be chargeable wirelessly. The vehicle body may include a solar panel.

The configuration of the battery pack shown in FIG. 1 may be changed as appropriate. For example, the circuit CR22 in the battery pack may further include a temperature adjustment device to be driven with electric power from the auxiliary battery 17. The temperature adjustment device may include at least one of a heating device that heats the battery 21 or a cooling device that cools the battery 21. The power storage device (battery pack 20) according to the above embodiment does not include a power supply for starting up the second control device (ECU 28a). However, the present disclosure is not limited to this, and the power storage device may include the power supply for the second control device. The power storage device is not limited to the battery pack, and may have a packless structure.

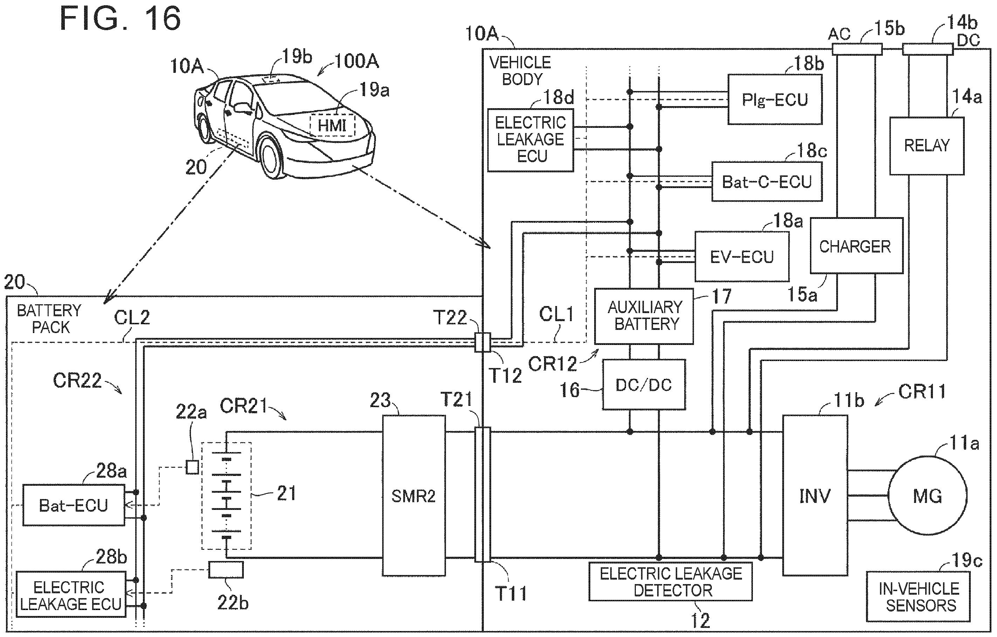

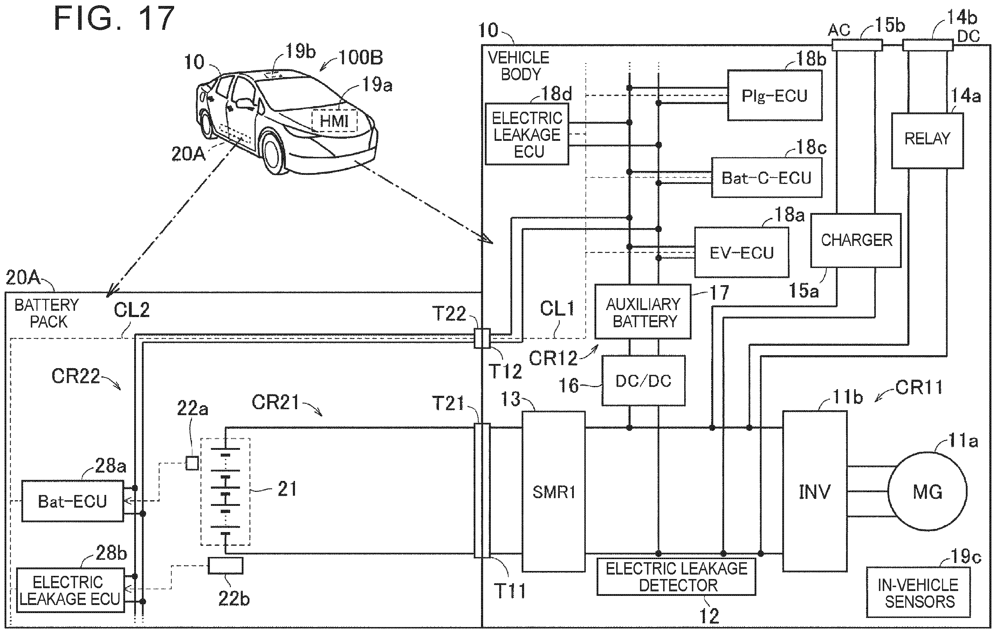

In the configuration shown in FIG. 1, at least one of the SMRs 13, 23 may be omitted. FIG. 16 shows a first modification of the configuration of the vehicle shown in FIG. 1. In a vehicle 100A shown in FIG. 16, the SMR 13 is omitted. A vehicle body 10A does not include the SMR 13. In the vehicle 100A, for example, the ECU 18a can switch the connected state and the disconnected state of the SMR 23 to switch application and non-application of the voltage from the battery 21 to the circuit CR11. FIG. 17 shows a second modification of the configuration of the vehicle shown in FIG. 1. In a vehicle 100B shown in FIG. 17, the SMR 23 is omitted. A battery pack 20A does not include the SMR 23. In the vehicle 100B, for example, the ECU 18a can switch the connected state and the disconnected state of the SMR 13 to switch application and non-application of the voltage from the battery 21 to the circuit CR11.

The various modifications described above may be combined as desired. For example, the process flows shown in FIGS. 9 to 11 may be changed in accordance with FIG. 8 or 13. The replacement request in FIG. 8 or 13 may be changed to the retry request. When the problem is not resolved even after the power storage device (battery pack) is reattached a predetermined number of times (e.g., once, twice, or three times), the vehicle body (first control device) may request the battery replacement system to replace the power storage device.

The vehicle is not limited to a passenger car, and may also be a bus, a truck, or a work vehicle (e.g., a tractor, a combined harvester, or a forklift truck). The vehicle may be configured to travel unmanned by autonomous driving or remote driving.

The embodiment disclosed herein should be considered as illustrative and not restrictive in all respects. The scope of the present invention is shown by the claims rather than by the above description of the embodiments, and is intended to include all modifications within the meaning and scope equivalent to those of the claims.

## Claims

1. A vehicle (100, 100A, 100B) comprising a vehicle body (10, 10A), wherein:
the vehicle body (10, 10A) includes a first circuit and a first control device;
the vehicle body (10, 10A) is configured such that a power storage device is attachable to and removable from the vehicle body (10, 10A), the power storage device including a second circuit, the second circuit including a battery (21); and
the first control device is configured to acquire information on at least one of a state of the battery (21) or a state of the second circuit from the power storage device when the power storage device is attached to the vehicle body (10, 10A), and determine, using the information, whether to apply a voltage of the battery (21) to the first circuit.

2. The vehicle (100, 100A, 100B) according to claim 1, wherein the information indicates at least one of the voltage of the battery (21), a temperature of the battery (21), or an electric leakage state of the second circuit.

3. The vehicle (100, 100A, 100B) according to claim 1, wherein the first control device is configured not to apply the voltage of the battery (21) to the first circuit until the information is acquired from the power storage device after the power storage device is attached to the vehicle body (10, 10A).

4. The vehicle (100, 100A, 100B) according to claim 1, wherein:
the power storage device is a battery pack (20, 20A) further including a second control device in addition to the second circuit;
the vehicle body (10, 10A) further includes a power supply; and
the second control device is started up with electric power supplied from the power supply when the power storage device is attached to the vehicle body (10, 10A), and the second control device that has been started up transmits the information to the first control device.

5. The vehicle (100, 100A, 100B) according to claim 4, wherein:
the second control device is configured to acquire the voltage of the battery (21);
the information indicates the voltage of the battery (21); and
the first control device is, when the power storage device is attached to the vehicle body (10, 10A), configured to apply the voltage of the battery (21) to the first circuit when the voltage of the battery (21) is within a predetermined range, and not to apply the voltage of the battery (21) to the first circuit when the voltage of the battery (21) is not within the predetermined range.

6. The vehicle (100, 100A, 100B) according to claim 4, wherein:
the second control device is configured to acquire a temperature of the battery (21);
the information indicates the temperature of the battery (21); and
the first control device is, when the power storage device is attached to the vehicle body (10, 10A), configured to apply the voltage of the battery (21) to the first circuit when the temperature of the battery (21) is within a predetermined range, and not to apply the voltage of the battery (21) to the first circuit when the temperature of the battery (21) is not within the predetermined range.

7. The vehicle (100, 100A, 100B) according to claim 4, wherein:
the second control device is configured to acquire an electric leakage state of the second circuit;
the information indicates the electric leakage state of the second circuit; and
the first control device is, when the power storage device is attached to the vehicle body (10, 10A), configured to apply the voltage of the battery (21) to the first circuit when no electric leakage has occurred in the second circuit, and not to apply the voltage of the battery (21) to the first circuit when electric leakage has occurred in the second circuit.

8. The vehicle (100, 100A, 100B) according to claim 1, wherein:
the vehicle body (10) further includes a first terminal configured such that the power storage device is attachable to and removable from the first terminal, and a first relay disposed between the first terminal and the first circuit;
the first circuit includes a motor; and
the first control device is configured to switch the first relay from a disconnected state to a connected state when the first control device determines to apply the voltage of the battery (21) to the first circuit.

9. The vehicle (100, 100A, 100B) according to claim 1, wherein:
the power storage device further includes a second terminal configured such that the vehicle body (10, 10A) is attachable to and removable from the second terminal, and a second relay disposed between the second terminal and the second circuit; and
the first control device is configured to switch the second relay from a disconnected state to a connected state when the first control device determines to apply the voltage of the battery (21) to the first circuit.

10. The vehicle (100, 100A, 100B) according to claim 1, wherein the first control device is configured to give a predetermined notification to a user of the vehicle (100, 100A, 100B) when the first control device determines not to apply the voltage of the battery (21) to the first circuit.

11. The vehicle (100, 100A, 100B) according to claim 1, wherein:
the first control device is configured to communicate with a battery replacement system (300), the battery replacement system (300) including a replacement device (350) configured to replace the power storage device attached to the vehicle body (10, 10A) with another power storage device; and
the first control device is configured to request the battery replacement system (300) to replace the power storage device attached to the vehicle body (10, 10A) when the first control device determines not to apply the voltage of the battery (21) to the first circuit.

12. The vehicle (100, 100A, 100B) according to claim 1, wherein:
the first control device is configured to communicate with a battery replacement system, the battery replacement system including a replacement device (350) configured to replace the power storage device attached to the vehicle body (10, 10A) with another power storage device; and
the first control device is configured to
determine whether to apply the voltage of the battery (21) to the first circuit before the battery replacement system (300) fixes the power storage device to the vehicle body (10, 10A),
request the battery replacement system (300) to fix the power storage device to the vehicle body (10, 10A) when the first control device determines to apply the voltage of the battery (21) to the first circuit, and
request the battery replacement system (300) to remove the power storage device from the vehicle body (10, 10A) when the first control device determines not to apply the voltage of the battery (21) to the first circuit.

13. The vehicle (100, 100A, 100B) according to claim 1, wherein the first control device is, when the power storage device is attached to the vehicle body (10, 10A), further configured to apply the voltage of the battery (21) to the first circuit when the information satisfies a predetermined requirement, and not to apply the voltage of the battery (21) to the first circuit when the information does not satisfy the predetermined requirement.

14. A battery replacement method comprising:
removing a first power storage device from a vehicle including a vehicle body (10, 10A) and the first power storage device, the vehicle body (10, 10A) including a first circuit and a first control device, the first power storage device including a first battery;
attaching a second power storage device to the vehicle body in place of the first power storage device, the second power storage device including a second circuit and a second control device, the second circuit including a second battery;
acquiring, by the first control device, information on at least one of a state of the second battery or a state of the second circuit from the second control device with the second power storage device attached to the vehicle body (10, 10A); and
determining, by the first control device, using the information acquired from the second control device, whether to apply a voltage of the second battery (21) to the first circuit.
